# EUROPÄISCHE PATENTSCHRIFT

(11) **EP 0 545 962 B1**
(45) Veröffentlichungstag und Bekanntmachung des Hinweises auf die Patenterteilung: **07.12.1994**
(21) Anmeldenummer: 91914504.5
(22) Anmeldetag: 21.08.1991
(51) Int. Cl.: G01L 1/14

(54) **KAPAZITIVER KRAFTSENSOR**
CAPACITIVE STRAIN GAUGE
CAPTEUR CAPACITIF DE FORCES

(30) Priorität: 01.09.1990 DE 4027753
(43) Veröffentlichungstag der Anmeldung: 16.06.1993
(73) Patentinhaber: ZIEGLER, Karlheinz, D-79227 Schallstadt (DE)
(72) Erfinder: ZIEGLER, Karlheinz, D-79227 Schallstadt (DE)
(74) Vertreter: Rackette, Karl, Dipl.-Phys. Dr.-Ing
(86) Internationale Anmeldenummer: DE9100671
(87) Internationale Veröffentlichungsnummer: WO9204608

(56) Entgegenhaltungen:
- DE-A- 3 426 165
- FR-A- 2 174 359

## Beschreibung

Die Erfindung betrifft einen kapazitiven Kraftsensor mit einem die eine Kapazitätselektrode aufweisenden Grundkörper und einem die andere Kapazitätselektrode aufweisenden Deckkörper sowie diese in einem Abstand voneinander haltende Abstandshalter.

Ein derartiger Kraftsensor ist aus der DE 34 26 165 A1 bekannt und gestattet das Erfassen einer einwirkenden Kraft durch die Veränderung der Kapazität zwischen den Kapazitätselektroden wenn der als Membran ausgebildete Deckkörper sich durchbiegt.

Derartige Druck- bzw. Kraftsensoren sind für hohe Drücke und Kräfte ungeeignet, da insbesondere die Gefahr besteht, daß die Membran auf der Gegenseite anstößt. Ein weiterer Nachteil bei derartigen Sensoren besteht darin, daß die Einleitung von Kräften besonderer äußerer Vorrichtungen bedarf. Weiter ist die Abhängigkeit der Kapazität von dem Druck bzw. der Kraft nicht linear.

Ausgehend von diesem Stand der Technik liegt der Erfindung die Aufgabe zugrunde, einen kapazitiven Kraftsensor zu schaffen, der sich durch einen kompakten Aufbau sowie durch die Möglichkeit des Erfassens besonders hoher Kräfte und Drücke sowie durch eine lineare Abhängigkeit der Kapazität von dem Druck bzw. der Kraft auszeichnet.

Diese Aufgabe wird erfindungsgemäß dadurch gelöst, daß die Materialstärke des Grundkörpers und des Deckkörpers ausreichend stark ist, um bei Belastungen des Kraftsensors eine Abstandsverringerung zwischen den Kapazitätselektroden ohne Durchbiegen der zwischen den Abstandshaltern gebildeten Materialbrücken durch eine Kompression wenigstens eines der Materialien zu erhalten, aus dem der Grundkörper und/oder der Deckkörper hergestellt sind.

Die Abstandshalter sind über die zueinander weisenden Flächen des Grundkörpers und des Deckkörpers verteilt angeordnet. Ihre Höhe oder Länge ist im Verhältnis zu den Materialstärken des Grundkörpers und des Deckkörpers so klein, daß sich Kapazitätsänderungen im wesentlichen durch Komprimieren des Materials für den Grund- oder Deckkörper ergeben. Insbesondere können die Abstandshalter durch eine Vielzahl von im Querschnitt rechteckigen Säulen gebildet sein, die schachbrettartig angeordnet sind und jeweils voneinander einen seitlichen Abstand haben, der in etwa ihrer Kantenlänge entspricht.

Die Abstandshalter können auch als Leisten ausgebildet sein, die sich entlang der Oberfläche des Grundkörpers in U-förmigen Bahnen erstrecken. Eine weitere Möglichkeit besteht darin, die Abstandshalter als Leisten auszubilden, die sich entlang von Kreisbögenabschnitten erstrecken.

Weitere zweckmäßige Ausgestaltungen ergeben sich aus der nachfolgenden Beschreibung von Ausführungsbeispielen der Erfindung anhand der Zeichnung. Es zeigen:
- Fig. 1: einen Längsschnitt durch einen kapazitiven Kraftsensor gemäß der Erfindung,
- Fig. 2: eine Draufsicht auf die Innenseite des Grundkörpers und den Querschnitt der Abstandshalter,
- Fig. 3: eine Draufsicht auf einen Grundkörper mit leistenförmigen Abstandshaltern,
- Fig. 4: eine Draufsicht auf einen Grundkörper mit bogenförmig gekrümmten leistenartigen Abstandshaltern,
- Fig. 5: einen kapazitiven Kraftsensor aus zusammendrückbaren Materialien im Längsschnitt zur Veranschaulichung der Funktionsweise der Erfindung,
- Fig. 6: eine der Fig. 5 entsprechende Darstellung, bei der lediglich das Material des Grundkörpers komprimierbar ist,
- Fig. 7: ein weiteres Ausführungsbeispiel eines Kraftsensors, dessen Abstandshalter einstückig mit dem Grundkörper hergestellt sind,
- Fig. 8: eine Draufsicht auf den Grundkörper des Kraftsensors gemäß Fig. 7,
- Fig. 9: ein Ausführungsbeispiel eines Kraftsensors mit einstückig ausgebildeten Abstandshalterhälften und einer isolierenden Verbindungsschicht, die sich quer durch die Abstandshalter erstreckt,
- Fig. 10: ein Ausführungsbeispiel eines Kraftsensors mit einem Deckkörper aus einem nichtleitenden Material,
- Fig. 11: ein Ausführungsbeispiel eines Kraftsensors. dessen Deckkörper eine Abschirmelektrodenschicht aufweist,
- Fig. 12: eine Abwandlung des Kraftsensors mit einer den Grundkörper durchziehenden Isolierschicht und einer auf dem Deckkörper aufgebrachten Isolierschicht,
- Fig. 13: einen Kraftsensor, dessen Deckkörper und Grundkörper elektrisch und mechanisch miteinander verbunden sind, im Längsschnitt entlang den Kraftsensoranschlußleitungen,
- Fig. 14: den Kraftsensor gemäß Fig. 13 im Längsschnitt entlang der Abschirmanschlußleitung,
- Fig. 15: eine Schnittansicht auf den Deckkörper des Kraftsensors gemäß den Fig. 13 und 14,
- Fig. 16: eine Schnittansicht auf den Grundkörper des Kraftsensors gemäß den Fig. 13 und 14,
- Fig. 17: ein Ausführungsbeispiel eines Kraftsensors zur Absolutmessung mit umdotierten Gebieten,
- Fig. 18: eine Schnittansicht auf den Deckkörper des Kraftsensors gemäß Fig. 17,
- Fig. 19: eine Schnittansicht auf den Grundkörper des Kraftsensors gemäß Fig. 17,
- Fig. 20: einen Längsschnitt entlang der Kraftsensoranschlußleitung eines weiteren Kraftsensors mit besonders einfachem Aufbau,
- Fig. 21: einen Längsschnitt entlang der Abschirmanschlußleitung des Kraftsensors gemäß Fig. 20,
- Fig. 22: ein Ausführungsbeispiel eines Kraftsensors für eine absolute Druckmessung mit einem besonders einfachen Aufbau im Längsschnitt entlang der Kraftsensoranschlußleitung,
- Fig. 23: einen Längsschnitt durch den Kraftsensor gemäß Fig. 22 entlang der Abschirmanschlußleitung,
- Fig. 24: eine Schnittansicht auf den Deckkörper des Kraftsensors gemäß den Fig. 22 und 23 und
- Fig. 25: eine Schnittansicht auf die Innenseite des Grundkörpers des Kraftsensors gemäß den Fig. 22 und 23.

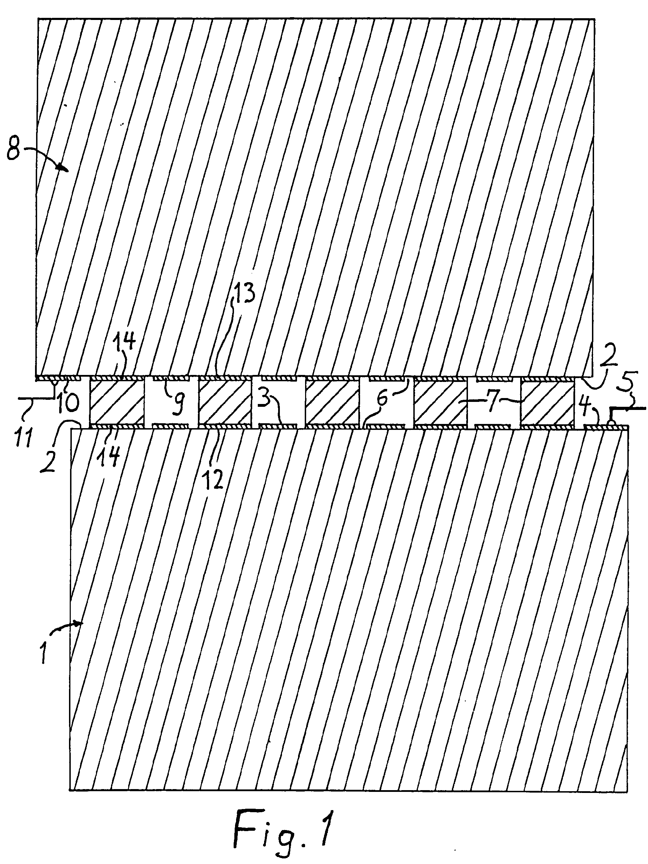

In Fig. 1 erkennt man im nichtmaßstäblichen Querschnitt ein erstes Ausführungsbeispiel für einen Druck- und Kraftsensor. Der nachfolgend kurz Kraftsensor genannte Druck- und Kraftsensor verfügt über einen Grundkörper 1, der auf seiner Innenseite 2 eine Grundkörper-Kapazitätselektrodenschicht 3 aufweist, die über eine Anschlußfläche 4 mit einer ersten Sensoranschlußleitung 5 elektrisch verbunden ist.

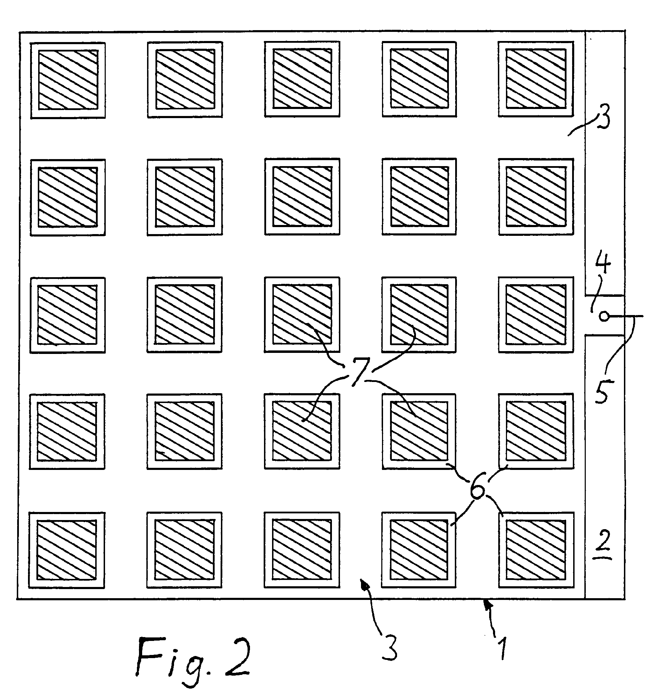

In Fig. 2 erkennt man die Grundkörper-Kapazitätselektrodenschicht 3 in einer Draufsicht zusammen mit der Anschlußfläche 4 und der ersten Sensoranschlußleitung 5. Die Grundkörper-Kapazitätselektrodenfläche 3 weist eine Vielzahl von quadratischen Aussparungen 6 auf, die in Fig. 2 im Querschnitt und in Fig. 1 im Längsschnitt dargestellte Abstandshalter 7 umgeben.

Die Abstandshalter 7 bestimmen den z.B. etwa 5 µm betragenden Abstand eines Deskkörpers 8 vom Grundkörper 1, der auf seiner zur Grundkörper-Kapazitätselektrodenschicht 3 weisenden Innenseite 2 mit einer Deckkörper-Kapazitätselektrodenschicht 9 versehen ist. Die Materialstärke des Grundkörpers 1 und/oder des Deckkörpers 8 beträgt z.B. 500 µm und ist somit erheblich größer als die Materialstärke der Abstandshalter 7. Die Deckkörper-Kapazitätselektrodenschicht 9 hat wie die Grundkörper-Kapazitätselektrodenschicht 3 eine Vielzahl von Ausnehmungen 6 zur Durchführung der Abstandshalter 7 sowie eine Anschlußfläche 10 zur elektrischen Verbindung mit einer zweiten Sensoranschlußleitung 11.

Bei dem in Fig. 1 dargestellten Ausführungsbeispiel sind die Abstandshalter 7 jeweils über eine untere Verbindungsschicht 12 und eine obere Verbindungsschicht 13 mit dem Grundkörper 1 und dem Deckkörper 8 verbunden.

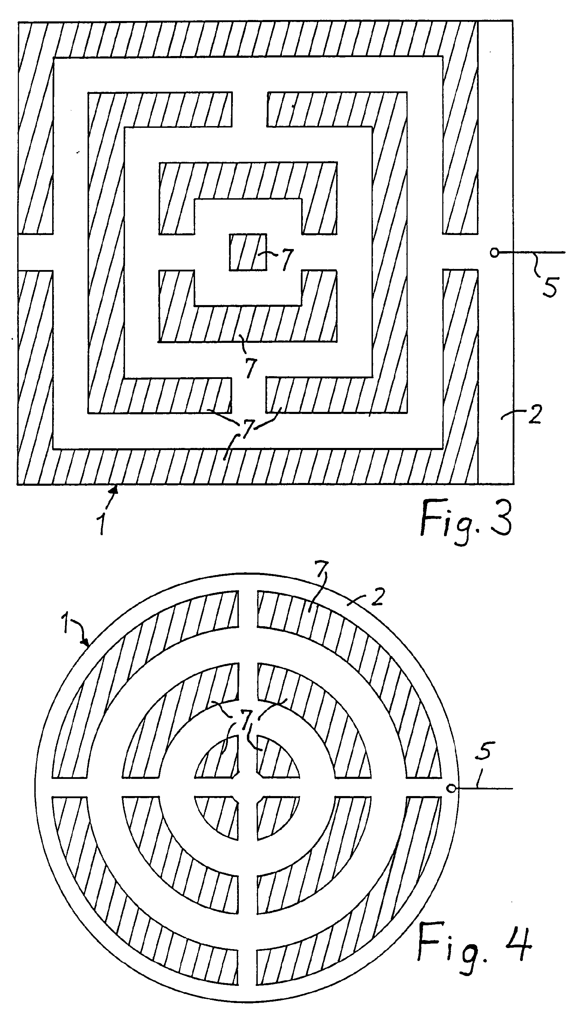

Fig. 3 zeigt eine der Fig. 2 entsprechende Querschnittsansicht auf den Grundkörper 1 eines Kraftsensors, dessen Abstandshalter 7 abweichend von den Abstandshaltern 7 gemäß Fig. 2 nur einen Abstandshalter 7 mit quadratischem Querschnitt und mehrere Abstandshalter 7 in Gestalt von Leisten mit einem in Draufsicht U-förmigen Verlauf entlang der Innenseite 2 des Grundkörpers 1 enthalten. die unmittelbar mit der Sensoranschlußleitung 5 verbunden ist, da der Grundkörper 1 bei dem in Fig. 3 dargestellten Ausführungsbeispiel aus einem leitenden Material besteht. so daß eine gesonderte Kapazitätselektrodenschicht nicht erforderlich ist.

Fig. 4 zeigt in Draufsicht einen Querschnitt durch Abstandshalter 7 entlang der Innenseite 2 eines leitenden Grundkörpers 1 mit kreisscheibenförmiger Gestalt statt mit einer rechteckförmigen Gestalt wie in den vorhergehenden Figuren. Die Abstandshalter 7 des in Fig. 4 dargestellten Ausführungsbeispiels erstrecken sich jeweils über einen Winkelbereich von etwa 90 Grad, so daß zwischen ihnen mehrere konzentrische Hohlräume oder Kavitäten mit kreuzförmig verlaufenden zusätzlichen Hohlräumen entstehen.

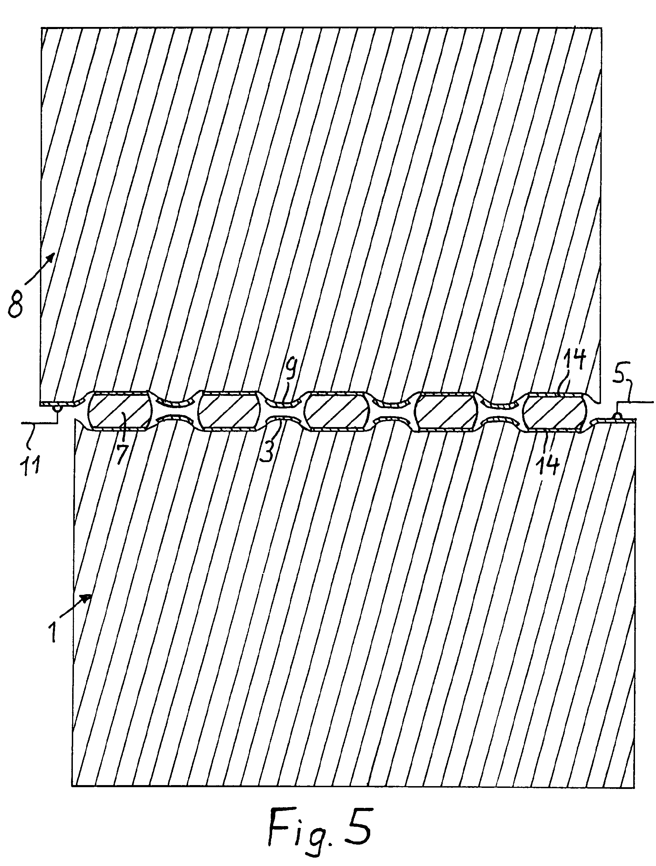

Fig. 5 zeigt entsprechend Fig. 1 einen Längsschnitt durch den Kraftsensor zur Veranschaulichung dessen Funktionsweise. Wenn der Grundkörper 1, der Deckkörper 8 und die Abstandshalter 7 aus einem elastisch komprimierbaren Material bestehen, erfolgt bei einer Krafteinwirkung oder der Einwirkung eines Druckes, durch den der Grundkörper 1 und der Deckkörper 8 mit in zueinanderweisenden Richtungen einwirkenden Kräften beaufschlagt werden, eine Materialverformung. Je nach dem Kompressionsmodul oder der Elastizitätskonstante der Materialien des Grundkörpers 1, der Abstandshalter 7 und des Deckkörpers 8 ergeben sich Volumenänderungen, so daß der Abstand zwischen der Grundkörper-Kapazitätselektrodenschicht 3 und der Deckkörper-Kapazitätselektrodenschicht 9 ausgehend von dem in Fig. 1 dargestellten Abstand beispielsweise in der in Fig. 5 dargestellten Weise verändert wird.

Bei dem in Fig. 5 dargestellten Ausführungsbeispiel ergeben sich aufgrund der Kompressionsmodule sowohl Verformungen des Grundkörpers 1 als auch des Deckkörpers 8 und der Abstandshalter 7. Die Abstandshalter 7 werden in Abstandshalterichtung belastet, wobei neben einer Volumenverringerung und einer Verringerung in Abstandsrichtung eine in Fig. 5 übertrieben stark dargestellte Verbreiterung erfolgt. An den Eindruckstellen entlang den Innenseiten 2 des Grundkörpers 1 und des Deckkörpers 8 bilden sich Vertiefungen in der Oberfläche des Grundkörpers 1 und des Deckkörpers 8, die dazu führen, daß die mit den Kapazitätselektrodenschichten 3 und 9 belegten Bereiche sich annähern, so daß die zwischen der Grundkörper-Kapazitätselelektrodenschicht 3 und der Deckkörper-Kapazitätselektrodenschicht 9 gebildete Kondensatorkapazität vergrößert wird. Der beschriebene Kraftsensor ist somit ein kapazitiver Sensor, bei dem nicht die Durchbiegung einer Membran, sondern die bereichsweise unterschiedliche Stauchung eines verhältnismäßig massiven Körpers, der insbesondere viel dicker als die Abstandshalter 7 sein kann, zu einer Kapazitätsveränderung führt.

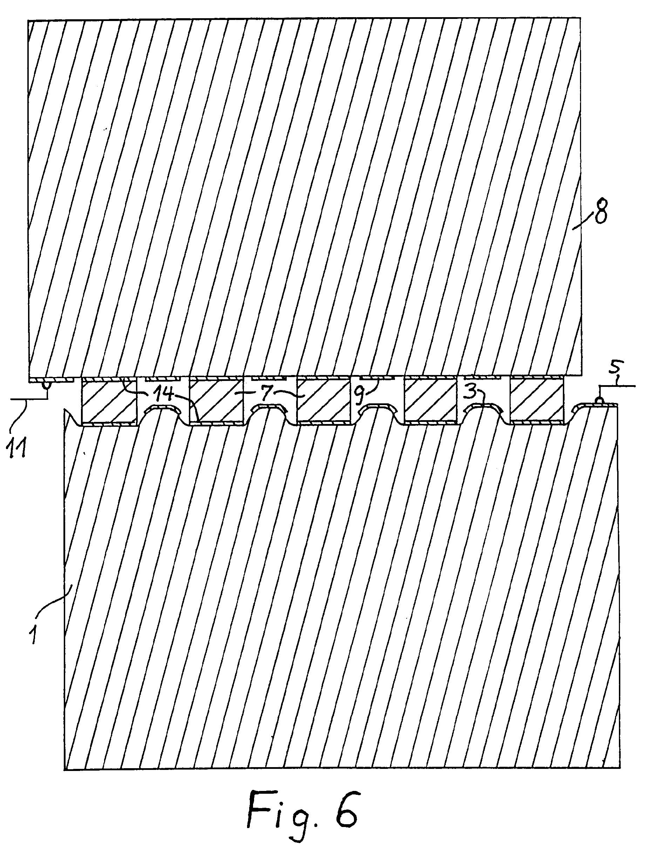

Fig. 6 zeigt ein Ausführungsbeispiel eines kapazitiven Kraftsensors, bei dem der Kompressionsmodul bzw. die Zusammendrückbarkeit der Materialien des Grundkörpers 1, der Abstandshalter 7 und des Deckkörpers 8 zu keiner Verformung des Deckkörpers 8 und der Abstandshalter 7, sondern lediglich zu einer Verformung des Grundkörpers 1 führen. Anhand der Fig. 5 und 6 erkennt man ohne weiteres, daß es zur kapazitiven Druck- oder Kraftmessung genügt, wenn das Material des Grundkörpers 1 oder das Material des Deckkörpers 8 oder das Material der Abstandshalter 7 bei einer gegebenen Kraft ein Zusammendrücken des Materials erlaubt. Die Abstandshalter 7 haben dabei eine Höhe in der Größenordnung der Zusammenpreßbarkeit des Kraftsensorsystems in dem vorgesehenen Meßbereich, so daß die Kapazitätselektrodenschichten 3 und 9 sich bei der maximal einwirkenden Kraft nicht berühren. Um bei einer Kraftüberschreitung einen Kurzschluß zu vermeiden, können eine oder beide Kapazitätselektrodenschichten 3 und 9 mit einer in der Zeichnung nicht dargestellten Isolierschicht versehen sein.

Der seitliche Abstand der Abstandshalter 7 liegt vorzugsweise in der Größenordnung ihrer jeweiligen Breite.

Die Höhen der Abstandshalter 7 sind in Fig. 1 übertrieben groß dargestellt. Die Kraftsensordicke ist in der Zeichnung ebenfalls übertrieben dargestellt, so daß die Kraftsensoren tatsächlich flacher als ihr Durchmesser oder ihre Kantenlänge sind. Insbesondere kann auch die Zahl der Abstandshalter 7 kleiner oder größer als in der Zeichnung dargestellt sein. Die Dicke des Grundkörpers 1 und des Deckkörpers 8 ist jeweils so gewählt, daß eine Verformung durch Stauchung oder Kompression und nicht durch eine Durchbiegung des Körpers erfolgt.

Die Abstandshalter 7 können an ihren Stirnenden jeweils über eine Verbindungsschicht 14 verfügen, wie in den Fig. 1, 5 und 6 dargestellt ist. Statt der Verbindung der Abstandshalter 7 mit dem Grundkörper 1 und dem Deckkörper 8 durch eine strukturierte Verbindungsschicht sind auch direkte mechanische Verbindungen der Abstandshalter 7 mit dem Grundkörper 1 und dem Deckkörper 8 möglich, und zwar insbesondere durch eine Verschmelzung, ein direktes Verschweißen oder ein anodisches Bonden.

Das Einleiten einer Kraft auf den kapazitiven Kraftsensor kann einfach planparallel ganzflächig auf die Außenfläche des Grundkörpers 1 oder des Deckkörpers 8 erfolgen. Für Druckeinwirkungen von Flüssigkeiten und Gasen ist darauf zu achten, daß der Grundkörper 1 oder Deckkörper 8, auf dessen Außenseite der Druck einwirkt, entsprechend dick und die Ausdehnungen zwischen den Abstandshaltern 7 entsprechend klein zu dimensionieren sind, um bei den zu messenden Drücken ein eventuelles membranähnliches Durchbiegen des Grundkörpers 1 oder des Deckkörpers 8 an den Stellen zwischen den Abstandshaltern 7 und eventuell dadurch bedingtes Berühren der Kapazitätselektrodenschichten 3, 9 zu vermeiden. Dabei liegt es auf der Hand, daß der meßbare Druck- und Kraftbereich von den elastischen Eigenschaften der verwendeten Materialien, von den Querschnittsflächen, der Form, der Anzahl sowie der Anordnung und der Höhe der Abstandshalter 7 abhängt. Bei vorgegebenen Materialien und lateralen Außendimensionen des Kraftsensors kann der Meßbereich über die Geometrie der Abstandshalter 7 eingestellt werden.

Die gegebenenfalls vorhandenen Verbindungsschichten 14 sind entsprechend dünn, so daß ihr Einfluß beim Zusammenpressen vernachlässigt werden kann. Es ist auch möglich, Verbindungsschichten 14 zu verwenden, die selbst entsprechende elastische Eigenschaften aufweisen, so daß sie nicht störend wirken.

Die Verbindungsschichten 14 können je nach der Verbindungstechnik einseitig oder beidseitig auf die Verbindungspartner Abstandshalter 7, Grundkörper 1 und Deckkörper 8 aufgebracht sein. Sie können auch mehrschichtig und aus unterschiedlichen Materialien hergestellt sein. Es ist auch möglich, die Verbindungsschichten 14 durch eine entsprechend dünne Kleberschicht zu realisieren. Die Verbindungsschichten 14 können durch eine elektrisch isolierende Schicht, zum Beispiel eine Glaslotschicht, eine Pyrexschicht, eine Siliziumdioxidschicht oder dergleichen gebildet sein, durch die die Abstandshalter 7 mit dem Grundkörper 1 und/oder Deckkörper 8 je nach Sensoraufbau verbunden, verschweißt, verlötet oder anodisch bzw. elektrostatisch gebondet sind.

Eine Verbindungsschicht 14 kann auch aus einem elektrisch leitenden Material bestehen. Dabei können Schweiß- bzw. Lötschichten oder durch zum Beispiel Aufdampfung, Aufsputtern oder Abscheidung aufgebrachte Schichten aus Metall oder Silizium verwendet werden.

Die verbindungsschichten 14 können auch aus mehreren Schichten unterschiedlicher Materialien bestehen. Die Verbindung kann durch Verschweißung bzw. Verlötung, Bonden oder Haftung erfolgen.

Bei der Auswahl der Materialien für die Verbindungsschichten 14, für den Grundkörper 1, für die Abstandshalter 7 und für den Deckkörper 8 ist bezüglich deren elektrischer Leitfähigkeit die Auswahl so zu treffen, daß die im Kraftsensor gebildete Kapazität nicht kurzgeschlossen wird. Wenn die Verbindungsschichten 14 nichtleitend sind, können für den Grundkörper 1, den Deckkörper 8 und die Abstandshalter 7 elektrisch leitende Materialien verwendet werden. Wenn der Grundkörper 1 oder der Deckkörper 8 aus einem elektrisch leitenden Material besteht, so kann auf die Aufbringung der Kapazitätselektrodenschichten 3 und 9 verzichtet werden, da entsprechend den Fig. 3 und 4 der Grundkörper 1 und der Deckkörper 8 selbst als Elektrode für die Kraftsensorkapazität verwendet werden können.

Als elektrisch leitende Materialien für den Kraftsensor können Metalle, Halbleiter und insbesondere Silizium verwendet werden. Als nichtleitende Materialien für die Herstellung des Kraftsensors kommen insbesondere Keramik, Quarz, Glas und Oxide in Frage. Der in Fig. 1 dargestellte Kraftsensor mit metallischen Kapazitätselektrodenschichten 3, 9 kann somit beispielsweise aus Quarzglas hergestellt werden.

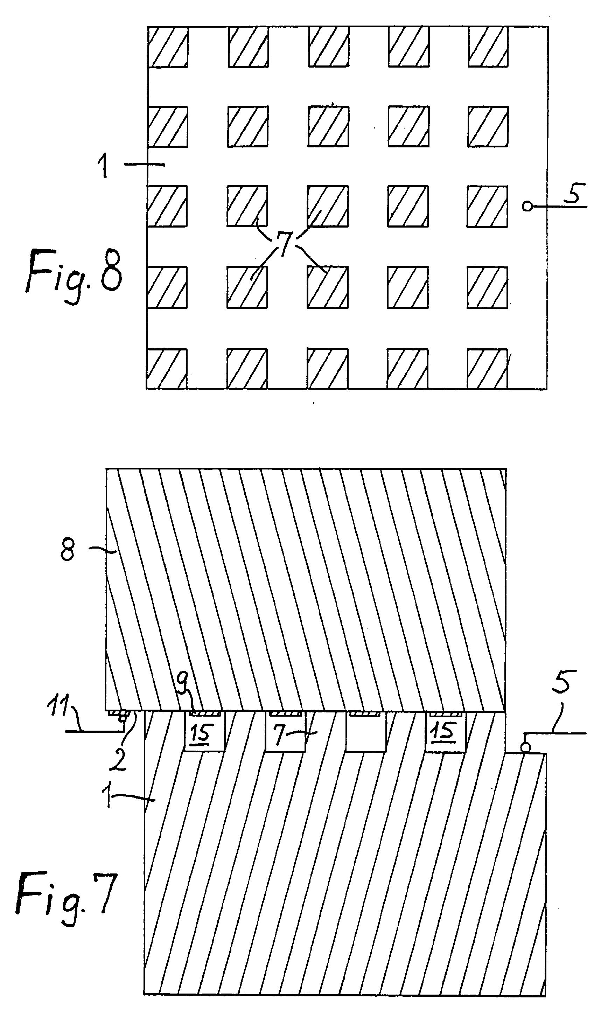

Fig. 7 zeigt einen Längsschnitt durch einen Kraftsensor, bei dem die Abstandshalter 7 und der Grundkörper 1 einstückig ausgebildet sind. Die Abstandshalter 7 des Grundkörpers 1 können insbesondere aus dem Grundkörper 1 durch Fräsen oder Ätzen von Ausnehmungen 15 herausgearbeitet werden. Fig. 8 zeigt in Draufsicht das Muster einer möglichen Anordnung von Abstandshaltern 7.

Bei dem in Fig. 7 und 8 dargestellten Ausführungsbeispiel besteht der Grundkörper 1 aus einem leitenden Material, das direkt mit der Sensoranschlußleitung 5 verbunden ist. Der Grundkörper 1 dient somit unmittelbar als erste Elektrode der Sensorkapazität und besteht beispielsweise aus leitendem Silizium. Der Deckkörper 8 kann aus Glas, zum Beispiel Pyrex, hergestellt sein, wobei der Grundkörper 1 und Deckkörper 8 durch anodisches Bonden miteinander verbunden werden können. Als zweite Elektrode der Sensorkapazität ist auf der zum Grundkörper 1 weisenden Innenseite 2 des Deckkörpers 8 eine entsprechend den Ausnehmungen 15 im Grundkörper 1 strukturierte Kapazitätselektrodenschicht 9, insbesondere aus einem aufgedampften oder aufgesputterten Metall, zum Beispiel Aluminium, aufgebracht.

Die Abstandshalter 7 des in Fig. 7 dargestellten Kraftsensors können auch hergestellt werden, indem auf dem Grundkörper 1 eine ausreichend dicke Beschichtung aufgebracht wird, die sich durch Maskieren und Ätzen entsprechend dem gewünschten Muster der Abstandshalter 7 strukturieren läßt. Insbesondere ist es möglich, durch Abscheiden oder Aufsputtern von Materialien, wie Oxiden, Polysilizium, epitaktischem Silizium, Glas, Pyrex usw. eine Abstandshalteranordnung zu erzeugen. Eine weitere Möglichkeit besteht in der Erzeugung einer Beschichtung durch einen chemischen Prozeß, zum Beispiel durch eine Oxydation der Grundkörperoberfläche. Die Abstandshalter 7 des Kraftsensors gemäß Fig. 7 können somit insbesondere durch eine thermische Oxydation von Silizium erzeugt werden.

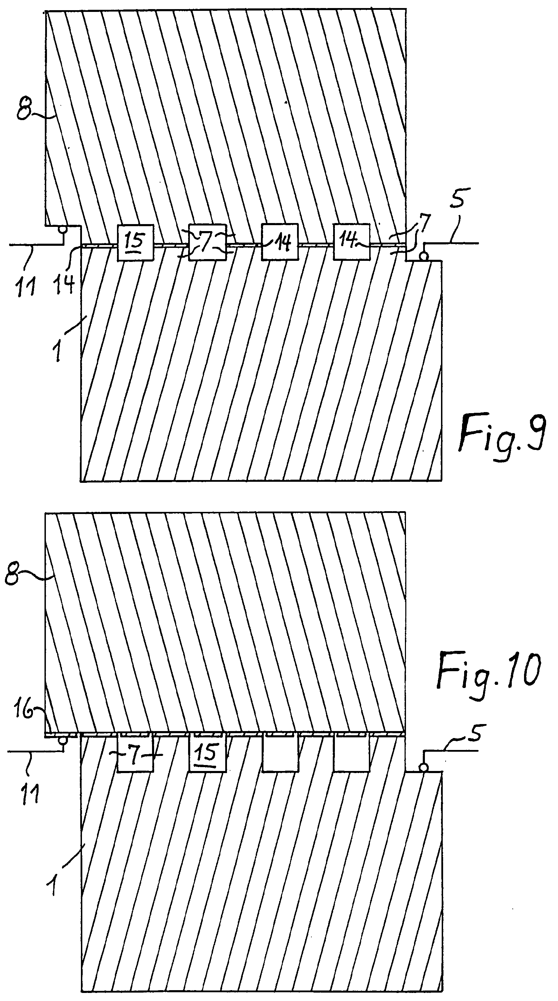

Bei der Verwendung einer isolierenden Verbindungsschicht 14 kann ein Kraftsensor mit dem in Fig. 9 dargestellten Längsschnitt realisiert werden. Bei dem in Fig. 9 dargestellten Kraftsensor sind zwei leitende Siliziumscheiben verwendet worden, wobei die Abstandshalter 7 zum einen Teil Bestandteil des Grundkörpers 1 und zum anderen Teil Bestandteil des Deckkörpers 8 sind. Die Abstandshalter 7 sind somit jeweils zur Hälfte einstückig mit dem Grundkörper 1 bzw. dem Deckkörper 8 hergestellt, indem Ausnehmungen 15 in den Oberflächen des Grundkörpers 1 und des Deckkörpers 8 herausgearbeitet worden sind. Bei der Herstellung des Kraftsensors wird beispielsweise der Grundkörper 1 mit der isolierenden Verbindungsschicht 14, beispielsweise einer Pyrexschicht versehen, die mit dem Deckkörper 8 direkt, zum Beispiel durch anodisches Bonden verbunden wird. Eine andere Möglichkeit besteht darin, sowohl den Grundkörper 1 als auch den Deckkörper 8 mit einer isolierenden Verbindungsschicht 14, zum Beispiel aus Siliziumdioxid, zu versehen und die Verbindungsschichten 14 anschließend unter Anwendung eines ausreichenden Druckes und einer ausreichenden Temperatur miteinander zu verbinden. Auf diese Weise ergibt sich ein einfacher Kraftsensor, dessen Grundkörper 1 und dessen Deckkörper 8 jeweils die Elektroden bilden.

Fig. 10 zeigt ein weiteres Ausführungsbeispiel für einen die Zusammendrückbarkeit von Materialien ausnutzenden kapazitiven Kraftsensor.

Der Grundkörper 1 des in Fig. 10 dargestellten Kraftsensors besteht aus leitendem Silizium, wobei der Grundkörper 1 als Elektrode unmittelbar mit der Sensoranschlußleitung 5 verbunden ist. Die Abstandshalter 7 aus leitendem Silizium sind einstückig in der oben erwähnten Weise hergestellt.

Der Deckkörper 8 besteht bei dem in Fig. 10 dargestellten Ausführungsbeispiel aus einem nichtleitenden Material, insbesondere Keramik, Quarz oder Glas. auf dessen Unterseite eine Goldschicht 16 aufgebracht ist. Zur besseren Verbindung bzw. Haftung der Goldschicht auf dem Deckkörper 8 ist es möglich, eine Zwischenschicht aus Chrom oder Nickel vorzusehen. Der Deckkörper 8 ist bei dem in Fig. 10 dargestellten Ausführungsbeispiel mittels der Goldschicht 16 über ein Gold-Silizium-Eutektikum mit den Abstandshaltern 7 aus Silizium verbunden. Die als Goldschicht 16 ausgebildete Verbindungsschicht weist bei dem hier beschriebenen Ausführungsbeispiel Aussparungen um die Abstandshalter 7 herum auf und kann somit gleichzeitig als Kapazitätselektrode dienen. Für die Herstellung der Verbindung kann es zweckmäßig sein, auch die Abstandshalter 7 aus Silizium mit einer Goldschicht zu versehen.

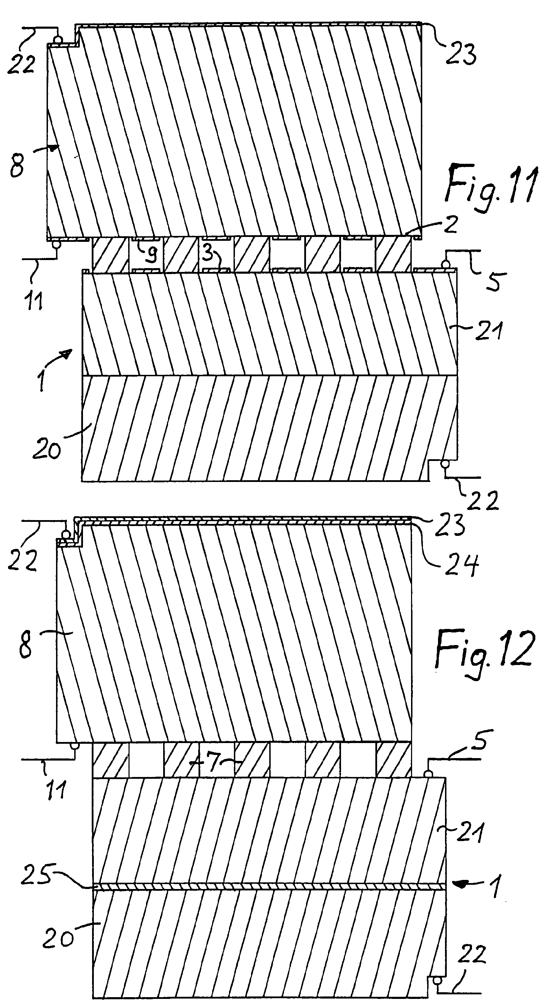

Bei der Herstellung von die Zusammendrückbarkeit von Materialien ausnutzenden kapazitiven Kraftsensoren kann es auch zweckmäßig sein, Kombinationen von isolierenden und leitenden Schichten als Verbindungsschicht 14 zu benützen. Je nach den verwendeten Materialien kann zum Beispiel durch einen isolierenden Film zwischen einer Metallschicht und dem Grundkörper 1 bzw. dem Deckkörper 8 und den Abstandshaltern 7 eine bessere Haftung erzielt werden. Mehrlagige Verbindungsschichten 14 können auch aus Gründen der thermischen Ausdehnungen und Spannungen vorteilhaft sein. Aus diesen und anderen Gründen, zum Beispiel um ein bestimmtes elastisches Verhalten zu erzielen oder um zusätzliche Abschirmelektroden zu erzeugen (vgl. Fig. 11), kann es zweckmäßig sein, den Grundkörper 1 bzw. den Deckkörper 8 und/oder die Abstandshalter 7 nicht aus einem einheitlichen Material sondern mehrlagig herzustellen.

Wie bereits oben erwähnt, kann es weiter zweckmäßig sein, die Kapazitätselektrodenschichten 3 und/oder 9 bzw. die Innenseite 2 eines als Kapazitätselektrode dienenden leitenden Grundkörpers 1 oder Deckkörpers 8 mit einer Isolationsschicht zu überziehen. um bei entsprechend großer Verformung das Berühren der Elektroden und damit einen elektrischen Kurzschluß zu vermeiden.

Wenn der Grundkörper 1 und/oder der Deckkörper 8 aus einem isolierenden Material besteht, so können diese durch eine äußere leitende Schicht bzw. durch einen äußeren leitenden Bestandteil zusätzliche Elektroden erhalten, wodurch eine äußere Abschirmung einer Seite oder beider Seiten des Kraftsensors ermöglicht wird. Dies kann zum Beispiel dadurch erfolgen, daß diese Elektroden auf Massepotential gelegt werden. Ein Ausführungsbeispiel eines derartigen Kraftsensors ist in Fig. 11 dargestellt. Bei dem in Fig. 11 dargestellten Kraftsensor ist der Grundkörper 1 mehrschichtig ausgebildet. Die in Fig. 11 dargestellte untere Hälfte 20 des Grundkörpers 1 ist leitend, während die obere Hälfte 21 aus einem nichtleitenden Material besteht. Die leitende untere Hälfte 20 ist mit einer Abschirmleitung 22 verbunden, die eine Verbindung mit dem Massepotential gestattet. Die nichtleitende obere Hälfte 21 des Grundkörpers 1 ist mit einer Grundkörper-Kapazitätselektrodenschicht 3 belegt, die mit der Sensoranschlußleitung 5 in Verbindung steht. Die zweite Sensoranschlußleitung 11 ist mit der Deckkörper-Kapazitätselektrodenschicht 9 verbunden, die sich auf der Innenseite 2 des nichtleitenden Deckkörpers 8 befindet. Wie man in Fig. 11 erkennt, befindet sich auf der Oberseite des Deckkörpers 8 eine Abschirmelektrodenschicht 23, die ebenfalls mit einer Abschirmleitung 22 mit dem Massepotential verbunden werden kann.

Fig. 12 zeigt ein Ausführungsbeispiel, bei dem der Deckkörper 8 leitend ist und zwischen der Abschirmelektrodenschicht 23 und dem Deckkörper 8 eine Isolierschicht 24 vorgesehen ist. Da der Deckkörper 8 als Kapazitätselektrode wirkt, ist er unmittelbar mit der Sensoranschlußleitung 11 verbunden. Die Abstandshalter 7 bestehen bei dem in Fig. 12 dargestellten Ausführungsbeispiel aus nichtleitendem Material, während die obere Hälfte 21 des Grundkörpers 1 aus leitendem Silizium besteht, das durch eine Pyrexschicht 25 von der unteren Hälfte 20 des aus Silizium bestehenden Grundkörpers 1 elektrisch getrennt ist. Die mechanische Verbindung der unteren Hälfte 20 und der oberen Hälfte 21 erfolgt durch anodisches Bonden. Die als Abschirmelektrodenkörper dienende untere Hälfte 20 ist über eine Abschirmleitung 22 an das Massepotential anschließbar.

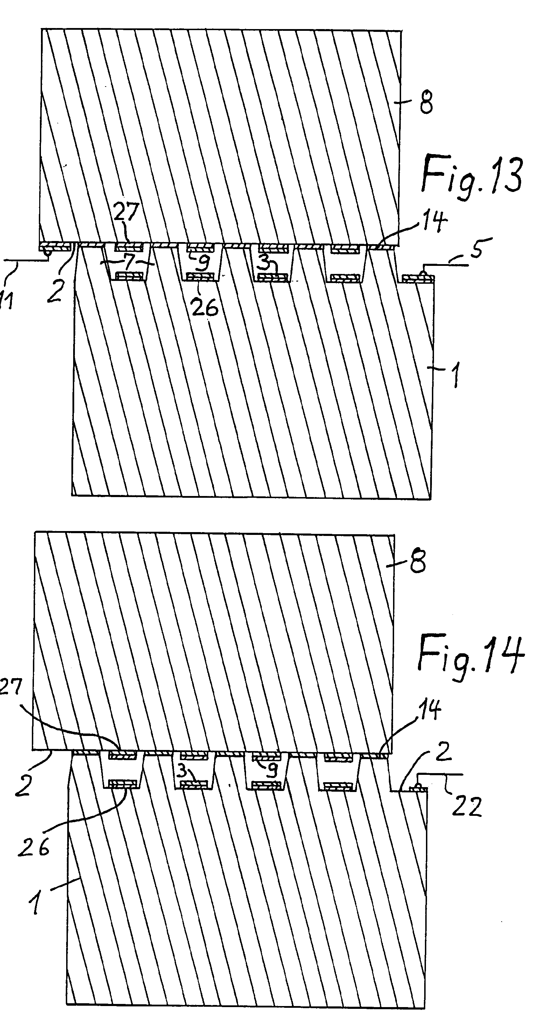

Die Fig. 13 bis 16 veranschaulichen ein Ausführungsbeispiel eines kapazitiven Kraftsensors, dessen Deckkörper 8 und dessen Grundkörper 1 aus leitendem Material, insbesondere Silizium bestehen. Es versteht sich, daß ein Grundkörper 1 oder ein Deckkörper 8 aus elektrisch leitendem Material als Abschirmelektrodenkörper benutzt werden kann. Die Kapazitätselektrodenschicht 3 bzw. 9 ist dann isoliert von dem leitenden Grundkörper 1 oder Deckkörper 8 aufzubringen. Aus diesem Grunde sind auf dem Grundkörper 1 und dem Deckkörper 8 strukturierte Isolierschichten 26, 27 aufgebracht. Die Abmessungen der Strukturen der Isolierschichten 26 und 27 und der Strukturen der Kapazitätselektrodenschichten 3 und 9 sind dabei so gewählt, daß ein ausreichender Abstand zwischen ihnen und den leitenden im Schnitt trapezförmigen Abstandshaltern 7, die durch Einätzen von Kavitäten im Grundkörper 1 hergestellt sind, vorhanden ist.

Die Abstandshalter 7 aus leitendem Silizium sind über eine elektrisch leitende Verbindungsschicht 14 mit der Unterseite 2 des Deckkörpers 8 mechanisch und elektrisch verbunden.

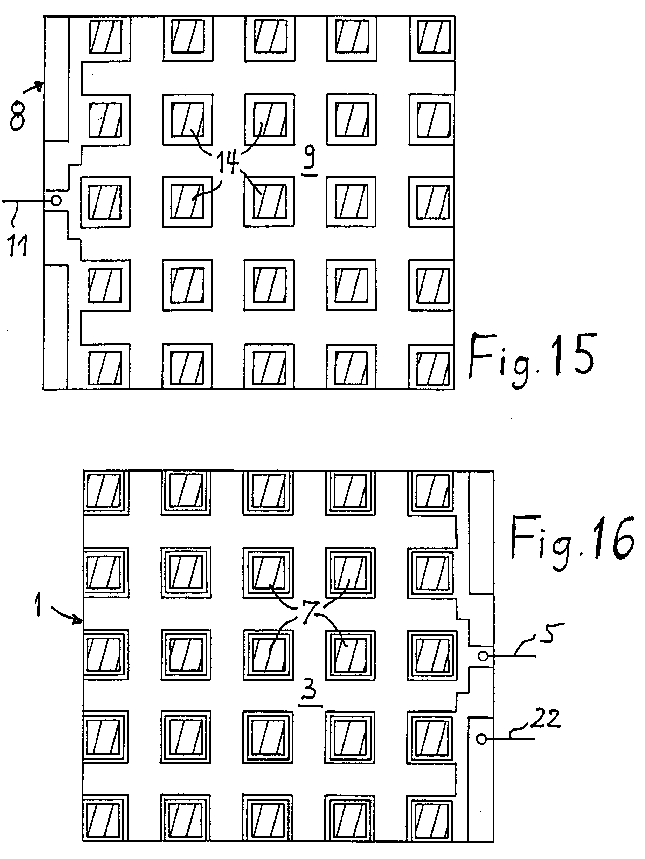

Die Kapazitätselektrodenschichten 3 und 9 bestehen vorzugsweise aus einer Metall- oder elektrisch leitenden Polysiliziumschicht, die im Bereich der Abstandshalter 7 mit Aussparungen versehen ist. Die Isolierschichten 26 und 27 werden vorzugsweise durch thermisch gewachsenes Siliziumdioxid hergestellt. Die elektrisch leitende Verbindungsschicht 14 besteht vorzugsweise aus einem Silizium-Eutektikum, zum Beispiel Gold-Silizium- oder Aluminium-Silizium-Eutektikum. Bei einer derartigen Ausgestaltung sind die den Grundkörper 1 und den Deckkörper 8 bildenden Siliziumkörper sowohl mechanisch als auch elektrisch miteinander verbunden, so daß auf eine Kontaktierung einer der beiden Siliziumkörper verzichtet werden kann. In Fig. 14 erkennt man, daß die Abschirmleitung 22 ohmisch mit dem Grundkörper 1 kontaktiert ist. Während die Fig. 13 einen Längsschnitt im Bereich der Sensoranschlußleitungen 5 und 11 darstellt, zeigt Fig. 14 einen Längsschnitt durch den Kraftsensor im Bereich der Abschirmleitung 22. Fig. 15 zeigt eine Draufsicht auf die Innenseite 2 des Deckkörpers 8, während Fig. 16 eine Schnittansicht auf den Grundkörper 1 darstellt.

Eine geeignete mechanische Verbindung zwischen dem Grundkörper 1 und dem Deckkörper 8 ergibt sich auch, indem die Verbindungsstellen mit Siliziumdioxid versehen werden und mittels Druck und Temperatur verbunden werden. In einem solchen Fall sind jedoch sowohl der Grundkörper 1 als auch der Deckkörper 8 mit einer Abschirmleitung 22 zu kontaktieren oder sie sind anderweitig, zum Beispiel über Bumps oder außerhalb elektrisch miteinander zu verbinden, was in der Zeichnung nicht dargestellt ist. Eine weitere Möglichkeit, die Siliziumkörper des Kraftsensors gemäß den Fig. 13 und 14 mechanisch miteinander zu verbinden, stellt das Silicon Direct Bonding dar.

Die Außenseiten des Grundkörpers 1 und des Deckkörpers 8 können abweichend von der Darstellung in den Fig. 13 und 14 mit einer harten Schutzschicht versehen sein.

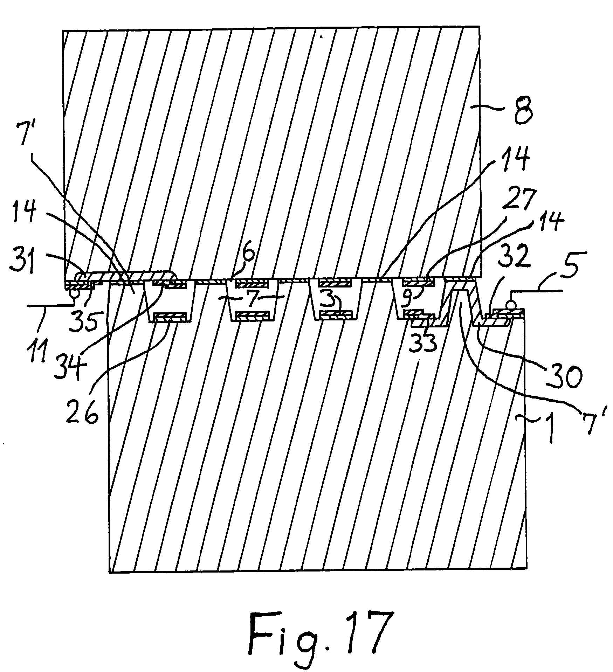

Ein weiteres Ausführungsbeispiel für einen Kraftsensor ist in den Fig. 17, 18 und 19 dargestellt. Der in diesen Fig. dargestellte Kraftsensor bildet einen absoluten Kraft- bzw. Drucksensor. Der Grundkörper 1 und der Deckkörper 8 dieses in Fig. 17 im Längsschnitt dargestellten Kraftsensors bestehen vorzugsweise aus Silizium. Die Abstandshalter 7 haben den in Fig. 17 erkennbaren trapezförmigen Querschnitt und sind aus dem Grundkörper 1 durch Kavitätenätzung gebildet. Eine nichtleitende Verbindung der Abstandshalter 7 mit dem Deckkörper 8 aus Silizium erfolgt über die elektrisch isolierende Verbindungsschicht 14.

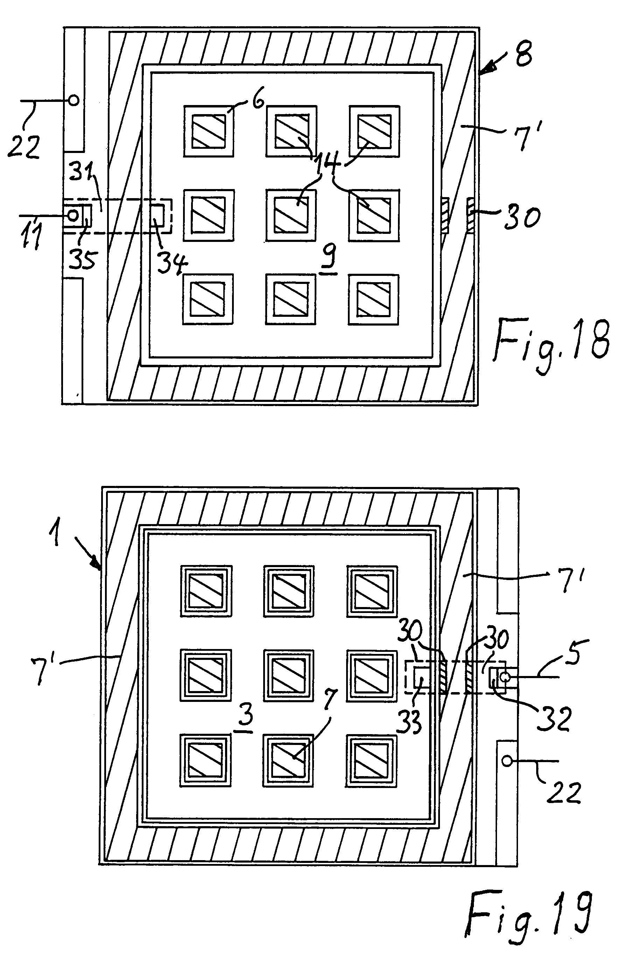

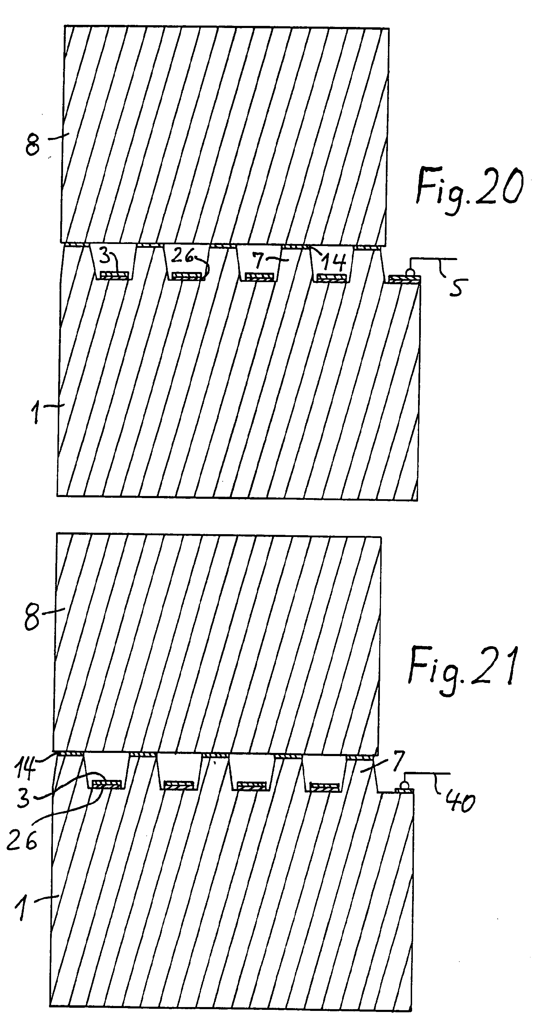

Wie man aus den Fig. 18 und 19 erkennen kann, sind die meisten der Abstandshalter 7 im Querschnitt quadratisch. Die in Fig. 17 ganz links und ganz rechts befindlichen Abstandshalter 7′ haben jedoch die in den Fig. 18 und 19 erkennbare Gestalt eines quadratischen Rahmens, der es gestattet, den Kraftsensor hermetisch abzuschließen, um eine absolute Kraft bzw. Druckmessung durchführen zu können. Da durch die in Draufsicht rahmenförmige Ausgestaltung von Abstandshaltern 7′ kein offener Kanal nach außen aus dem Zwischenraum zwischen den Abstandshaltern 7 zur Verfügung steht, sind bei dem in den Fig. 17 bis 19 dargestellten Ausführungsbeispiel in den Siliziumscheiben des Grundkörpers 1 und des Deckkörpers 8 umdotierte Gebiete 30 und 31 vorhanden. Das umdotierte Gebiet 30 bildet im Grundkörper 1 gegenüber dem Siliziumgrundmaterial einen isolierenden P-N-Übergang, der bei entsprechender Sperrspannung isolierend ist. Entsprechendes gilt für das umdotierte Gebiet 31 im Deckkörper 8, das sich flächig entlang eines Teils der Innenseite 2 des Deckkörpers 8 erstreckt, während sich das umdotierte Gebiet 30 des Grundkörpers 1, wie in den Fig. 17 und 19 zu erkennen ist, streifenförmig als Brücke über den in Draufsicht rahmenförmigen Abstandshalter 7′ erstreckt.

Die Grundkörper-Kapazitätselektrodenschicht 3 ist vom Grundkörper 1 durch die Isolierschicht 26 und die Deckkörper-Kapazitätselektrodenschicht 9 durch die Isolierschicht 27 auf dem Siliziummaterial isoliert aufgebracht. Die Isolierschichten 26 und 27 haben jedoch Fenster 32, 33, 34 und 35, über die die Kapazitätselektrodenschichten 3 und 9 mit den umdotierten Gebieten 30 und 31 in elektrischer Verbindung stehen. Auf diese Weise gestatten es die umdotierten Gebiete 30 und 31, die Grundkörper-Kapazitätselektrodenschicht 3 und die Deckkörper-Kapazitätselektrodenschicht 9 jeweils elektrisch mit den Sensoranschlußleitungen 5 und 11 zu verbinden. Die umdotierten Gebiete 30 und 31 dienen somit dazu, die Kapazitätselektroden im Innern des Kraftsensors durch den äußeren, geschlossenen Abstandshalter 7′ nach außen zu führen, wo sie mit den Sensoranschlußleitungen 5 und 11 kontaktiert werden können.

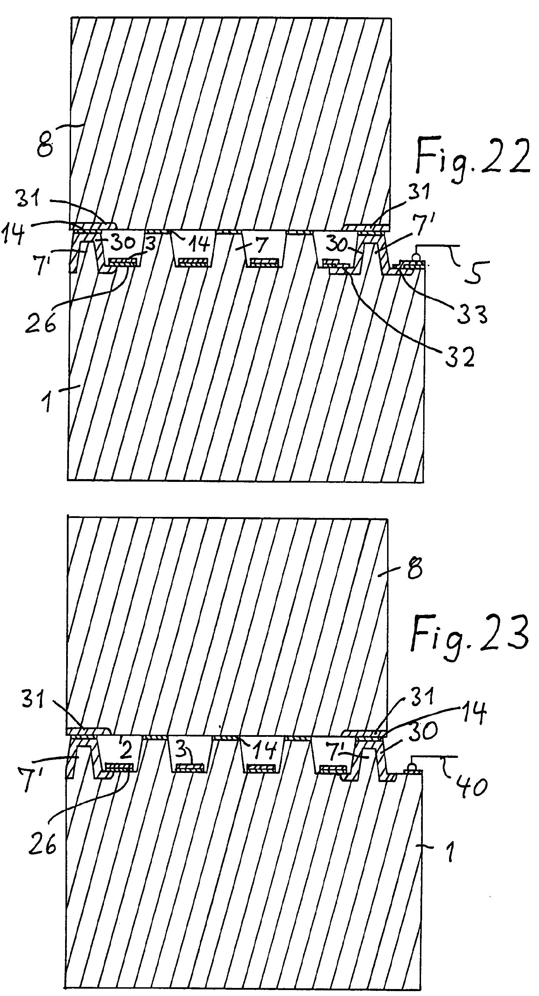

Die Fig. 20 und 21 zeigen das Ausführungsbeispiel für einen recht einfachen Kraftsensor, der sich ergibt, indem eine der Kapazitätselektroden des Kraftsensors auf das Abschirmpotential gelegt wird. Die Fig. 20 und 21 zeigen einen Längsschnitt durch einen derartigen Sensor, dessen Grundkörper 1 in Draufsicht der Darstellung in der Fig. 16 entspricht. Der Grundkörper 1 und der Deckkörper 8 des in den Fig. 20 und 21 dargestellten Kraftsensors besteht vorzugsweise aus Silizium. Der Deckkörper 8 dient dabei gleichzeitig als Kapazitätselektrode und Abschirmelektrode und ist sowohl mechanisch als auch elektrisch über die leitende Verbindungsschicht 14 mit dem Siliziummaterial des Grundkörpers 1 verbunden. Die Verbindungsschicht 14 besteht vorzugsweise aus einem Gold-Silizium-Eutektikum oder einem Aluminium-Silizium-Eutektikum. Die GrundkörperKapazitätselektrodenschicht 3 ist durch die Isolierschicht 26 von ihrer Unterlage elektrisch isoliert. Die in Fig. 20 erkennbare Sensoranschlußleitung 5 stellt den elektrischen Kontakt zu dieser ersten Kapazitätselektrode dar. Die zweite Kapazitätselektrode wird durch das Siliziummaterial des Deckkörpers 8 und des Grundkörpers 1 gebildet, die über eine Abschirm- und Sensorleitung 40 kontaktiert ist.

Die bei diesem Kraftsensor gemessene Kapazität besteht zwischen der isoliert aufgebrachten Grundkörper-Kapazitätselektrodenschicht 3 und dem Deckkörper 8 einerseits, die kraft- bzw. druckempfindlich veränderbar ist, und einem kraft- bzw. druckunempfindlichen Anteil einer Kapazität, deren Dielektrikum durch die Isolierschicht 26 und nicht durch den Zwischenraum zwischen dem Deckkörper 8 und der Grundkörper-Kapazitätselektrodenschicht 3 gebildet ist.

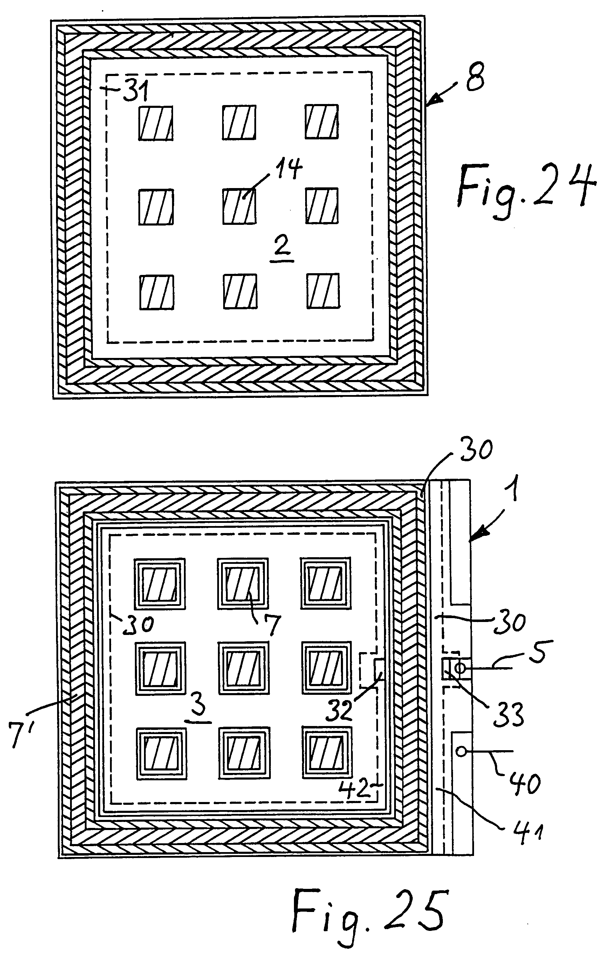

Die Fig. 22 bis 25 zeigen einen ähnlich einfachen Kraftsensoraufbau für eine absolute Kraft- bzw. Druckmessung. Einzelheiten des Aufbaus ergeben sich aus den Fig. 22 bis 25, die eine Reihe von bereits oben beschriebenen Merkmalen zeigen. Als Grundmaterial für den Grundkörper 1 und den Deckkörper 8 ist wiederum Silizium vorzugsweise verwendet. Die Abstandshalter 7 eines innenliegenden Bereiches sind von einem rahmenförmigen Abstandshalter 7′ zum Einschließen des Innenraums des Kraftsensors umgeben.

Der Deckkörper 8 bildet die eine der beiden Kapazitätselektrodenschichten. Die Grundkörper-Kapazitätselektrodenschicht 3 ist auf dem Grundkörper 1 durch eine Isolierschicht 26 elektrisch isoliert aufgebracht, die über Fenster 32 und 33 verfügt, welche eine Kontaktierung der Grundkörper-Kapazitätselektrodenschicht 3 mit dem umdotierten Gebiet 30 gestatten, welches, wie in den Fig. 22, 23 und 25 erkennbar ist, den rahmenförmigen Abstandshalter 7′ sowie Randstreifen 41 und 42 umfaßt. Durch eine derartige Ausbildung ist es möglich, die Sensoranschlußleitung 5 über das Fenster 33, über das umdotierte Gebiet 30, das aufgrund eines P-N-Übergangs zum Siliziummaterial des Grundkörpers 1 von diesem elektrisch isoliert ist, und über das Fenster 32 mit der Grundkörper-Kapazitätselektrodenschicht 3 zu kontaktieren.

Das umdotierte Gebiet 31 des Deckkörpers ist in den Fig. 22 bis 24 zu erkennen. Es hat in Draufsicht die Gestalt eines quadratischen Rahmens, der den Abstandshalter 7′ nach innen überragt. Auf diese Weise ist sichergestellt, daß das umdotierte Gebiet 30 trotz der leitenden Verbindungsschicht 14, durch die der Grundkörper 1 und der Deckkörper 8 mechanisch und elektrisch leitend miteinander verbunden sind, electrisch gegen über dem als Abschirmung dienenden Deckkörper 8 isoliert ist. Der Deckkörper 8 und der Grundkörper 1 sind über eine Abschirm- und Sensorleitung 40 kontaktiert.

Die leitende Verbindungsschicht 14 besteht vorzugsweise wieder aus einem der oben erwähnten Eutektika.

Der beschriebene Kraftsensor hat einen besonders einfachen Aufbau, da die Verbindungsflächen des äußeren Abstandshalters 7′ vollkommen innerhalb umdotierter Gebiete liegen, die zum Siliziumgrundmaterial einen isolierenden P-N-Übergang bilden. Dank der umdotierten Gebiete 30, 31 ist es möglich, die Grundkörper-Kapazitätselektrodenschicht 3 von innen durch den geschlossenen Abstandshalter 7′ elektrisch nach außen zu führen, und dort mit der Sensorleitung 5 zu kontaktieren. Wie oben beschrieben umfassen die umdotierten Gebiete 30 und 31 auf beiden Siliziumscheiben die gesamte Verbindungsfläche des geschlossenen Abstandshalters 7′, um einen elektrischen Kurzschluß zwischen dem umdotierten Gebiet (Kapazitätselektrode) und dem Siliziumgrundmaterial (Abschirmelektrode) durch die leitende Verbindungsschicht 14 zu vermeiden. Die elektrische Verbindung des Siliziumgrundmaterials als Abschirmelektrode erfolgt über die innenliegenden Abstandshalter 7 und die leitende Verbindungsschicht 14.

## Patentansprüche

1. Kapazitiver Kraftsensor mit einem die eine Kapazitätselektrode aufweisenden Grundkörper (1) und einem die andere Kapazitätselektrode aufweisenden Deckkörper (8) sowie mit diese in einem Abstand voneinander haltenden Abstandshaltern (7), **dadurch gekennzeichnet,** daß die Materialstärke des Grundkörpers (1) und des Deckkörpers (8) ausreichend stark ist, um bei Belastungen des Kraftsensors eine Abstandsverringerung zwischen den Kapazitätselektroden (2, 3, 9) ohne Durchbiegen der zwischen den Abstandshaltern (7, 7′) gebildeten Materialbrücken durch eine Kompression wenigstens eines der Materialien zu erhalten, aus dem der Grundkörper (1) und/oder der Deckkörper (8) hergestellt sind.

2. Kapazitiver Kraftsensor nach Anspruch 1, dadurch gekennzeichnet, daß die Materialstärke des Grundkörpers (1) und des Deckkörpers (8) größer als der seitliche Abstand der Abstandshalter (7, 7′) ist.

3. Kapazitiver Kraftsensor nach Anspruch 1 oder 2, dadurch gekennzeichnet, daß die Abstandshalter (7) im Querschnitt quadratische nicht verformbare Säulen sind, deren Höhe in etwa den seitlichen Abständen entspricht.

4. Kapazitiver Kraftsensor nach Anspruch 1 oder 2, dadurch gekennzeichnet, daß die Abstandshalter (7) als Leisten ausgebildet sind, die sich U-förmig entlang der Oberfläche (2) des Grundkörpers (1) erstrecken.

5. Kapazitiver Kraftsensor nach Anspruch 1 oder 2, dadurch gekennzeichnet, daß die Abstandshalter (7) als Leisten ausgebildet sind, die sich entlang von Kreisbogenabschnitten erstrecken.

## Claims

1. A capacitive force sensor comprising a base body (1) having the one capacitance electrode and a cover body (8) having the other capacitance electrode and spacers (7) holding the base and cover bodies at a spacing from each other, characterised in that the thickness of the material of the base body (1) and the cover body (8) is sufficiently great that when the force sensor is subjected to loadings the spacing between the capacitance electrodes (2, 3, 9) is reduced without flexing of the material bridges formed between the spacers (7, 7′) by compression of at least one of the materials from which the base body (1) and/or the cover body (8) are made.

2. A capacitive force sensor according to claim 1 characterised in that the thickness of the material of the base body (1) and the cover body (8) is greater than the lateral spacing of the spacers (7, 7′).

3. A capacitive force sensor according to claim 1 or claim 2 characterised in that the spacers (7) are non-deformable columns which are of square cross-section and whose height approximately corresponds to the lateral spacings.

4. A capacitive force sensor according to claim 1 or claim 2 characterised in that the spacers (7) are in the form of bars which extend in a U-shape along the surface (2) of the base body (1).

5. A capacitive force sensor according to claim 1 or claim 2 characterised in that the spacers (7) are in the form of bars which extend along arc portions.

## Revendications

1. Capteur capacitif de forces avec un corps de base (1) pourvu d'une électrode à capacité variable (3) et un couvercle (8) pourvu d'une autre électrode à capacité variable, ainsi qu'une pièce d'écartement (7) qui maintient les deux électrodes écartées, caractérisé en ce que l'épaisseur du matériau dont se compose le corps de base (1) et le couvercle (8) est suffisante, pour que lorsque le capteur de forces subit une contrainte, l'écartement entre les électrodes à capacité variable (2, 3, 9) diminue par compression d'au moins un des matériaux dont se composent le corps de base (1) et/ou le couvercle (8), sans fléchissement des ponts de matériau formé entre les pièces d'écartement (7, 7′).

2. Capteur capacitif selon la revendication 1, caractérisé en ce que l'épaisseur du matériau dont se composent le corps de base (1) et le couvercle (8) est supérieure à l'écartement latéral des pièces d'écartement (7, 7′).

3. Capteur capacitif selon les revendications 1 ou 2, caractérisé en ce que les pièces d'écartement (7) en coupe transversale sont des colonnes non déformables dont la hauteur correspond environ aux écartements latéraux.

4. Capteur capacitif selon la revendication 1 ou 2, caractérisé en ce que les pièces d'écartement (7) sont formées de baguettes qui s'étendent en forme de U sur la surface supérieure (2) du corps de base (1).

5. Capteur capacitif selon la revendication 1 ou 2, caractérisé en ce que les pièces d'écartement (7) sont formées de baguettes qui s'étendent sur des portions d'arcs de cercles.
